# EUROPÄISCHE PATENTSCHRIFT

(11) **EP 1 467 155 B1**
(45) Veröffentlichungstag und Bekanntmachung des Hinweises auf die Patenterteilung: **30.09.2009**
(21) Anmeldenummer: 04450079.1
(22) Anmeldetag: 01.04.2004
(51) Int. Cl.: F24D 19/10, F24J 2/46

(54) **Solaranlage**
Solar system
Système solaire

(30) Priorität: 09.04.2003 AT 5542003
(43) Veröffentlichungstag der Anmeldung: 13.10.2004
(73) Patentinhaber: Siemens AG Österreich, 1210 Wien (AT)
(72) Erfinder: Pertiller, Gerhard, 5023 Koppl (AT)
(74) Vertreter: Maier, Daniel Oliver

(56) Entgegenhaltungen:
- EP-A- 0 444 403
- GB-A- 1 587 584
- US-A- 5 413 091

## Beschreibung

Die Erfindung bezieht sich auf eine Solaranlage mit einem Sonnenkollektor , der über einen Primär-Flüssigkeitskreislauf an die Primärseite eines Wärmetauschers angeschlossen ist, mit einem Speicher, der über einen Sekundär-Flüssigkeitskreislauf an die Sekundärseite des Wärmetauschers angeschlossen ist, mit einer Primärpumpe in dem Primärkreislauf und einer Sekundärpumpe in dem Sekundärkreislauf sowie mit einer Steuerung zur Ansteuerung der Pumpen in Abhängigkeit von mittels Sensoren gemessenen Temperaturen, wobei zumindest der Primärkreislauf aktivierbar ist, sobald gemessene Temperaturen oder deren Differenzen vorgebbare Werte über- oder unterschreiten. Eine solche Solaranlage ist z.B. aus Dokument US 5 413 091 bekannt.

Bei derartigen Anlagen ist der völlig geschlossene Primärkreislauf, welcher einen oder mehrere Sonnenkollektoren enthält, üblicherweise mit Wasser gefüllt, dem ein Frostschutzmittel, z. B. Glykol, in einem solchen Ausmaß beigemengt ist, dass ein Einfrieren und damit eine Beschädigung von Leitungen, vor allem aber des Sonnenkollektors, ausgeschlossen werden kann.

Der Sekundärkreislauf, der thermisch über einen Wärmetauscher, z. B. einen Plattentauscher, mit dem Primärkreislauf in Verbindung steht, enthält jedoch üblicherweise normales Leitungswasser, das gegebenenfalls auch als Brauchwasser zur Verfügung stehen soll, und dem daher kein Frostschutzmittel beigemengt werden kann.

Wenn die Anlage, z. B. bei Nacht, nicht in Betrieb ist und Winterbedingungen herrschen, kühlt sich die Flüssigkeit im Primärkreislauf, jedenfalls im Bereich des meist vor Witterung ungeschützten Sonnenkollektors der jeweiligen Außentemperatur entsprechend auf tiefe Temperaturen, z. B.-15° C, ab.

So bald die Anlage eingeschaltet wird, gelangt die kalte Flüssigkeit, gefördert über die Pumpe im Primärkreislauf, zu dem Wärmetauscher, welcher sich üblicherweise in einem Gebäude befindet und daher frostgeschützt ist. Die nun den Wärmetauscher durchströmende Primärflüssigkeit kann, wenn sie sehr kalt ist, zu einem Gefrieren des Wassers aus dem Sekundärkreislauf führen. Dadurch kann es zu schweren Schäden, insbesondere an dem Wärmetauscher kommen. Derartige Schäden sind besonders unangenehm, da sie naturgemäß im Winter auftreten, d. h. zu einer Zeit, zu der ein Ausfall der Solaranlage besonders unangenehm ist. Bis der defekte Wärmetauscher repariert ist, können weitere Frost(folge)-schäden auftreten.

Es ist eine Aufgabe der Erfindung, eine Solaranlage zu schaffen, welche frei von den oben genannten Nachteilen ist.

Diese Aufgabe wird mit einer Solaranlage der eingangs genannten Art gelöst, bei welcher erfindungsgemäß die Steuerung dazu eingerichtet ist, nach einer Aufforderung zum Aktivieren des Primärkreislaufs mit Hilfe eines hydraulischen Mittels vorerst einen den Wärmetauscher zumindest im wesentlichen ausschließenden Hilfsprimärkreislauf aufrecht zu erhalten, bis eine mittels eines Sensors im Bereich des Primärkreislaufs gemessene Temperatur einen Frostschäden ausschließenden Wert übersteigt.

Dank der Erfindung können die erwähnten Frostschäden, insbesondere der Wärmetauscher, auf einfache und wirkungsvolle Weise vermieden werden.

Eine günstige und wirksame Ausführungsform zeichnet sich dadurch aus, dass das hydraulische Mittel eine Ventilanordnung im Primärkreislauf ist, mit welcher die Primärseite des Wärmetauschers überbrückbar ist.

Dabei kann als sehr einfache Variante vorgesehen sein, dass die Ventilanordnung ein Dreiwegeventil ist, mit dessen Hilfe die Primärseite des Wärmetauschers über einen Bypass überbrückbar ist. Zweckdienlich ist es in diesem Fall, wenn das Dreiwegeventil im Rücklauf des Primärkreislaufs sitzt und mit dem Bypass verbunden ist. Eine weitere Verbesserung besonders bei sehr niederen Außentemperaturen ergibt sich, falls im Zulauf des Primärkreislaufs an der Seite des Wärmetauschers ein Rückschlagventil angeordnet ist.

Als besonders sichere Alternative bietet sich an, dass die Ventilanordnung aus zwei Dreiwegeventilen an den beiden Seiten des Bypass besteht, welche von der Steuerung gesteuert bei Überbrückung der Primärseite des Wärmetauschers diese Primärseite vollständig von dem den Kollektor enthaltenden Teil des Primärkreislaufs abtrennen.

Gleichfalls durch besondere Sicherheit zeichnet sich eine Ausführung aus, bei welcher die Ventilanordnung aus einem Vier-Wege-Ventil besteht, welches von der Steuerung gesteuert, bei Überbrückung der Primärseite des Wärmetauschers diese Primärseite vollständig von dem den Sonnenkollektor enthaltenden Teil des Primärkreislaufs abtrennt.

Bei einer Variante, welche keine gesteuerten Ventile verwendet, ist vorgesehen, dass zusätzlich zu der Primärkreispumpe eine primäre Hilfspumpe vorgesehen ist, welche nach Aktivierung durch die Steuerung kollektornahe einen primären, den Wärmetauscher ausschließenden Hilfskreislauf aufrecht erhalten kann, bis eine Mindesttemperatur im Kollektorbereich erreicht ist. Hierbei kann es, je nach verwendeter Hilfspumpe, zweckmäßig sein, wenn im Primärkreislauf zwischen Hilfspumpe und Wärmetauscher ein Rückschlagventil angeordnet ist.

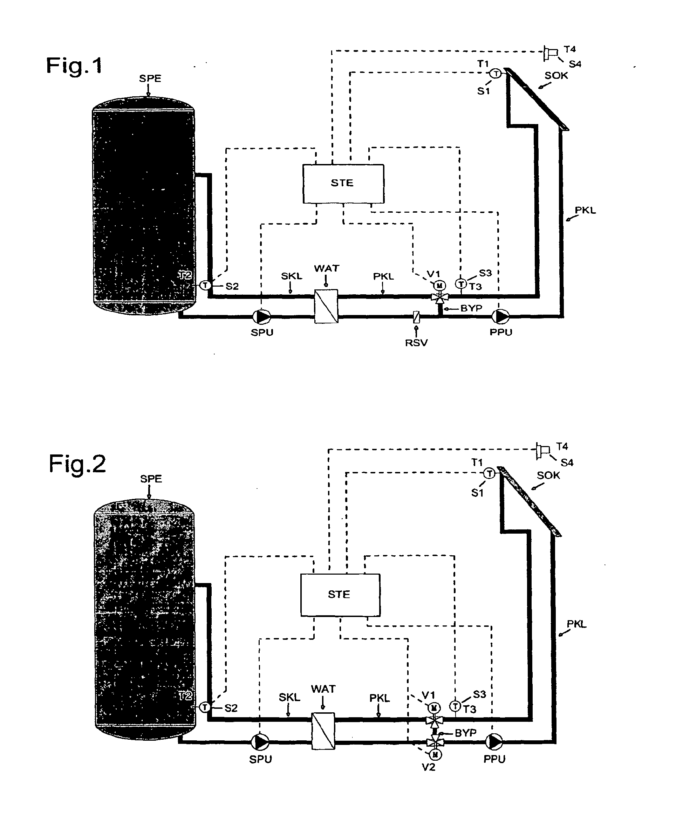

Unter Bezugnahme auf Fig. 1 wird nun eine erste Variante der Erfindung erläutert. Die schematisch abgebildete Solaranlage besitzt einen Sonnenkollektor SOK, der über einen Primär-Flüssigkeitskreislauf PKL an die Primärseite eines Wärmetauschers WAT angeschlossen ist. Eine Primärpumpe PPU fördert eine Flüssigkeit, üblicherweise ein Wasser-Methanol-Gemisch in diesen geschlossenen Primärkreislauf zwischen dem Sonnenkollektor SOK und der Primärseite des Wärmetauschers WAT. Letzterer kann beispielsweise als Plattentauscher ausgebildet sein. Der Sonnenkollektor SOK kann selbstverständlich aus mehreren parallel und/oder in Serie geschalteten Einheiten bestehen.

Der Sekundärkreislauf SKL ist einerseits an die Sekundärseite des Wärmetauschers WAT und andererseits an einen Wasserspeicher SPE angeschlossen, wobei eine Sekundärpumpe SPU für die Förderung des Wassers im Sekundärkreislauf SKL sorgt. Wenn im Betrieb Sonnen- oder Wärmestrahlung auf den Sonnenkollektor SOK einfällt, wird die im Primärkreislauf PKL zirkulierende Flüssigkeit ständig erwärmt und gibt Ihre Wärme über den Wärmetauscher WAT an den Sekundärkreislauf SKL ab, wobei eine Wärmespeicherung in dem Speicher SPE erfolgt, d. h. das Wasser in diesem Speicher SPE heizt sich auf. Je nach Konzeption der Solaranlage kann das Wasser aus dem Speicher SPE bzw. in dem Sekundärkreislauf SKL in hier nicht gezeigter Weise für Heizzwecke verwendet werden und/oder als Brauchwasser in einem Haushalt oder Betrieb. Die entsprechenden Anschlussarmaturen etc. sind, da für die Erfindung unwesentlich, hier nicht dargestellt.

Wie bei jeder derzeitigen Solaranlage ist auch hier eine Steuerung STE vorgesehen, die in Abhängigkeit vor allem verschiedener durch Sensoren gemessener Temperaturen die Anlage einschaltet und ganz allgemein verschiedene Ventile und Pumpen steuert, welche den Betrieb der Anlage den vorhandenen bzw. gewünschten Temperaturen anpasst. Die hier gezeugte Steuerung wird nur insoweit erläutert, als sie in Zusammenhang mit der Erfindung steht. Tatsächlich können der Steuerung noch weitere Aufgaben, vor allem in Zusammenhang mit der Wärme- und Wasserversorgung an der Sekundärseite zukommen.

Im vorliegenden Beispiel wird mit Hilfe eines Sensors S1 die Temperatur T1 im Bereich des Sonnenkollektors SOK gemessen und der entsprechende Messwert der Steuerung STE zugeführt. Gleiches gilt für die im Speicherbereich gemessene Temperatur T2, für welche ein Temperatursensor S2 vorgesehen ist. Dieser Sensor S2 kann beispielsweise die Temperatur des im Speicher SPE vorhandenen Wassers an einer ausgewählten Stelle messen. Mit Hilfe eines Temperatursensors S3 wird die Temperatur T3 im Primärkreislauf entfernt von dem Sonnenkollektor SOK gemessen.

Schließlich kann auch ein Sonnenfühler S4 vorgesehen sein, welcher eine Temperatur T4 oder einen der Einstrahlungsleistung, gemessen z. B. in W/m², entsprechenden Wert misst.

In den Rücklauf des Primärkreislaufs PKL ist ein Dreiwegeventil in der gezeigten Weise eingefügt, welches außerdem über einen Bypass BYP mit dem Zulauf von dem Wärmetauscher WAT zu dem Sonnenkollektor SOK verbunden ist. Außerdem ist noch zwischen dem Bypass BYP und dem Wärmetauscher WAT im Zulauf ein Rückschlagventil RSV eingefügt. Das von der Steuerung STE angesteuerte Dreiwegeventil V1 kann so gesteuert werden, dass es entweder den Rücklauf völlig freigibt, sodass die durch die Pumpe PPU verursache Zirkulation zwischen Sonnenkollektor SOK und Primärseite des Wärmetauschers WAT ungestört vor sich gehen kann. Andererseits kann das Ventil so angesteuert werden, dass die Primärseite des Wärmetauschers WAT durch den Bypass BYP aus diesem Kreislauf ausgeschlossen ist.

Die Steuerung ist nun dazu eingerichtet, die Primärpumpe PPU zu starten, wenn die Temperatur T1 an dem kollektorseitigen Sensor S1 eine mit dem speicherseitigen Sensor S2 gemessene Temperatur T2 um eine einstellbare Größe überschreitet. Der Start kann zusätzlich davon abhängig gemacht werden, dass eine vorgebbare Mindesttemperatur T1 am Sensor S1 erreicht wurde. Nun wird das Wasser von der Pumpe PPU im Primärkreislauf PKL gepumpt.

Eine andere vorgebbare Startbedingung ist die, dass der mit dem Sonnenfühler S4 erfasste Temperatur- oder Strahlungswert T4 einen bestimmten Wert überschreitet und außerdem die Temperatur T2 die Temperatur T1 um einen gewissen Betrag übersteigt.

Schließlich kann man als Startbedingung auch vorgeben, dass der Temperatur- oder Strahlungswert T4 einen bestimmten Wert übersteigt und zusätzlich die Temperatur T1 im Kollektorbereich einen Mindestwert aufweist.

Die Erfindung setzt nun hier ein, dass beim Einschalten der Primärpumpe PPU die Flüssigkeit nicht über die Primärseite des Wärmetauschers WAT fließt, sondern durch das entsprechend geschaltete Ventil V1 über den Bypass BYP an dem Wärmetauscher WAT vorbei wieder in Richtung Sonnenkollektor SOK. Die Steuerung schaltet das Ventil V1 erst dann um, wenn die Primärpumpe PPU bereits einige Zeit in Betrieb war und bis die mit dem Sensor S3 gemessene Temperatur T3 einen Wert erreicht hat, der Frostschäden ausschließt.

Mit anderen Worten, soll die Temperatur T3 beispielsweise nicht mehr Minusgrade aufweisen. Die genannte Zeitverzögerung ist notwendig, damit in dem Primärkreislauf PKL ein halbwegs stationärer Temperaturzustand erreicht ist. Zu Beginn einer Inbetriebnahme können nämlich die Temperaturen sehr unterschiedlich sein, wenn sich der Sonnenkollektor SOK im Freien befindet und beispielsweise mit Eis oder Schnee bedeckt ist, wogegen im allgemeinen das Dreiwegeventil V1 und die Primärpumpe PPU in einem geschützteren Bereich, z. B. in einem Gebäude angeordnet sind. An Stelle der Temperatur T3 kann man zusätzlich oder alternativ auch die Bedingung stellen, dass die Temperatur T1 im Kollektorbereich einen bestimmten Mindestwert aufweist

Um ein langsames Eindringen des kalten Wasser-Glykol-Gemischs in den Hinlauf des Primärkreislaufs PKL zu verhindern, kann zwischen den Wärmetauscher WAT und dem Bypass BYP in der in Fig. 1 gezeigten Weise ein Rückschlagventil RSV eingesetzt sein.

Dank der Erfindung ist sicher gestellt, dass keine kalte Flüssigkeit der Kollektoranschlussleitungen oder der mit Schnee bedeckten Kollektoren in Richtung des Wärmetauschers WAT fließt und auch eine irrtümlich von Hand eingeschaltete Primärpumpe PPU kann das bei zu geringer Sonneneinstrahlung kalte Wasser-Glykol-Gemisch nicht mehr in Richtung Wärmetauscher WAT transportieren und ein Zerstören des Wärmetauschers WAT wird vermieden. Ein Zerstören des Wärmetauschers durch Frost kann nicht nur den Wärmetauscher WAT als solchen zerstören, sondern es könnte sich das reine Wasser des Sekundärkreislaufs SKL mit dem Wasser-Glykol-Gemisch des Primärkreislaufs PKL vermischen, wodurch letztlich die Verrohrung des Primärkreislaufs und die Sonnenkollektoren SOK einfrieren und zerstört werden könnten.

Bei der Ausführung nach Fig. 2 ist ein weiteres Dreiwegeventil V2 vorgesehen und zwar an dem anderen Ende des Bypasses BYP im Hinlauf des Primärkreislaufs PKL. Das Dreiwegeventil V1 aus Fig. 1 ist hier mit dem Bezugszeichen V1' bezeichnet. Beide Dreiwegeventile V1' und V2 werden von der Steuerung STE so gesteuert, dass in dem anfänglichen Zustand nach dem Einschalten der Anlage die Primärpumpe PPU die Flüssigkeit ausschließlich über den Bypass BYP vorbei an der Primärseite des Wärmetauschers WAT treibt. Bei der Ausführung nach Fig. 2 kann natürlich das Rückschlagventil RSV der Fig. 1 entfallen. Im übrigen ist diese Ausführung völlig gleichgestaltet wie jene nach Fig.1.

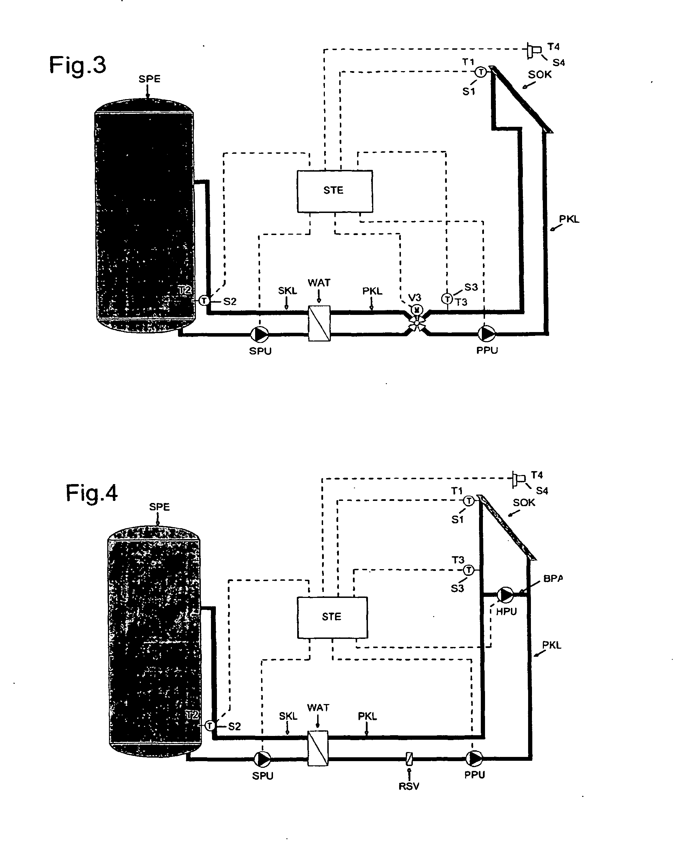

Fig. 3 zeigt, dass an Stelle eines Dreiwegeventils VI oder zweier Dreiwegeventile V1', V2 ein Vierwegeventil V3 vorgesehen sein kann. Auch dieses Ventil V3 wird von der Steuerung STE so gesteuert, dass in dem bereits beschriebenen anfänglichen Betriebszustand, bei welchem die Flüssigkeit im Primärkreislauf PKL noch so kalt ist, dass eine Beschädigung des Wärmetauschers WAT zu befürchten ist, die Flüssigkeit direkt über das Vierwegeventil V3 mit Hilfe der Primärpumpe PPU gepumpt wird, vorbei an der Primärseite des Wärmetauschers WAT. Erst nach Erreichen einer gewissen Temperatur im Primärkreislauf PKL, schaltet die Steuerung STE das Vierwegeventil V3 um, sodass der normale Betriebszustand erreicht wird, bei welchem die Flüssigkeit im primären Kreislauf PKL von dem Sonnenkollektor SOK direkt zur Primärseite des Wärmetauschers WAT fließt und von hier durch die Pumpe PPU getrieben wieder zu dem Sonnenkollektor SOK zurück. Im übrigen ist auch hier die Ausführung gleich wie bei den Fig. 1 und 2.

Eine Variante, die keine steuerbaren Ventile verwendet ist in Fig. 4 dargestellt. Hier ist eine zusätzliche Pumpe, nämlich eine Hilfspumpe HPU bei dem Sonnenkollektor SOK oder in dessen Nähe in einem Bypass angeordnet. Wenn diese Hilfspumpe HPU in Betrieb ist, kann ein Kreislauf neu des Sonnenkollektors SOK aufrecht erhalten werden. Die Temperatur T3 wird in diesem Kreislauf, etwas entfernt von dem Sonnenkollektor SOK gemessen, wogegen die Temperatur T1 im unmittelbaren Bereich des Sonnenkollektors SOK bzw. an diesem gemessen wird.

Die Steuerung STE ist somit dazu eingerichtet, die Anlage entsprechend den oben angegebenen oder anderen temperaturabhängigen Startbedingungen einzuschalten, z. B. die Hilfspumpe HPU dann einzuschalten, wenn die Temperatur T1 an dem kollektornahen Sensor S1, die mit dem Sensor S2 gemessene Temperatur T2 bei dem Speicher SPE um eine einstellbare Größe überschreitet und wenn eine Mindesttemperatur T1 an dem Sensor S1 erreicht wurde. Es wird sodann die Flüssigkeit im Primärkreislauf PKL lediglich in dem Beschriebenen kleinen Kreislauf nahe des Sonnenkollektors SOK gepumpt. Um in diesem Zustand schleichende Zirkulationen in der Rohrleitung in Richtung des Wärmetauschers WAT zu vermeiden, ist auf einen entsprechenden Abstand zu achten, bzw. kann eine solche schleichende Zirkulation durch den Einbau beispielsweise eines Rückschlagventils RSV, wie in Fig. 4 gezeigt, verhindert werden. Möglich ist natürlich auch der Einbau eines zusätzlichen Absperrventils.

Die Steuerung besitzt auch eine Differenzregelung für den Sekundärkreislauf SKL, wobei die Temperaturen T3 und T2 verglichen werden. Sobald die Temperatur T3 an dem Sensor S3 die Temperatur T2, welche bei dem Speicher SPE mit dem Sensor S2 gemessen wird, um eine einstellbare Größe überschreitet und eine vorgegebene Mindesttemperatur T3 an dem Sensor S3 erreicht ist, werden die Sekundärpumpe SPU und die eigentliche Primärpumpe PPU eingeschaltet und die Hilfspumpe HPU in dem Bypass BPA wird abgeschaltet.

Auch auf diese Weise wird das angestrebte Ziel, nämlich Eindringen von unterkühlter Flüssigkeit in den Primärkreis PKL zu dem Wärmetauscher WAT vermieden.

## Patentansprüche

1. Solaranlage mit einem Sonnenkollektor (SOK), der über einen Primär-Flüssigkeitskreislauf (PKL) an die Primärseite eines Wärmetauschers (WAT) angeschlossen ist, mit einem Speicher (SPE), der über einen Sekundär-Flüssigkeitskreislauf (SKL) an die Sekundärseite des Wärmetauschers angeschlossen ist, mit einer Primärpumpe (PPU) in dem Primärkreislauf und einer Sekundärpumpe (SPU) in dem Sekundärkreislauf sowie mit einer Steuerung (STE) zur Ansteuerung der Pumpen (PPU, SPU) in Abhängigkeit von mittels Sensoren (S1, S2, S3, S4) gemessenen Temperaturen (T1 bzw. T4), wobei zumindest der Primärkreislauf aktivierbar ist, sobald gemessene Temperaturen (T4) oder deren Differenzen vorgebbare Werte über- oder unterschreiten,
**dadurch gekennzeichnet, dass**
die Steuerung (STE) dazu eingerichtet ist, nach einer Aufforderung zum Aktivieren des Primärkreislaufs mit Hilfe eines hydraulischen Mittels (V1, V1' + V2, HPU, V3) vorerst einen den Wärmetauscher (WAT) zumindest im wesentlichen ausschließenden Hilfsprimärkreislauf aufrecht zu erhalten, bis eine mittels eines Sensors (S3, S1) im Bereich des Primärkreislaufs und/oder des Kollektors (SOK) gemessene Temperatur (T3, T1) einen Frostschäden ausschließenden Wert übersteigt.

2. Solaranlage nach Anspruch 1, **dadurch gekennzeichnet, dass** das hydraulische Mittel eine Ventilanordnung (V1, V1' + V2, V3) im Primärkreislauf ist, mit welcher die Primärseite des Wärmetauschers (WAT) überbrückbar ist.

3. Solaranlage nach Anspruch 2, **dadurch gekennzeichnet, dass** die Ventilanordnung ein Dreiwegeventil (V1) ist, mit dessen Hilfe die Primärseite des Wärmetauschers über einen Bypass (BYP) überbrückbar ist.

4. Solaranlage nach Anspruch 3, **dadurch gekennzeichnet, dass** das Dreiwegeventil (V1) im Rücklauf des Primärkreislaufs sitzt und mit dem Bypass (BYP) verbunden ist.

5. Solaranlage nach einem der Ansprüche 2 bis 4, **dadurch gekennzeichnet, dass** im Zulauf des Primärkreislaufs an der Seite des Wärmetauschers (WAT) ein Rückschlagventil (RSV) angeordnet ist.

6. Solaranlage nach Anspruch 2, **dadurch gekennzeichnet, dass** die Ventilanordnung aus zwei Dreiwegeventilen (V1 V2) an den beiden Seiten des Bypass (BYP) besteht, welche von der Steuerung (STE) gesteuert bei Überbrückung der Primärseite des Wärmetauschers (WAT) diese Primärseite vollständig von dem den Kollektor (SOK) enthaltenden Teil des Primärkreislaufs abtrennen.

7. Solaranlage nach Anspruch 2, **dadurch gekennzeichnet, dass** die Ventilanordnung aus einem Vierwegeventil (V3) besteht, welches von der Steuerung (STE) gesteuert, bei Überbrückung der Primärseite des Wärmetauschers (WAT) diese Primärseite vollständig von dem den Sonnenkollektor (SOK) enthaltenden Teil des Primärkreislaufs (PKL) abtrennt.

8. Solaranlage nach Anspruch 1, **dadurch gekennzeichnet, dass** zusätzlich zu der Primärkreispumpe (PPLI) eine primäre Hilfspumpe (HPLI) vorgesehen ist, welche nach Aktivierung durch die Steuerung (STE) kollektomahe einen primären, den Wärmetauscher (wart) ausschließenden Hilfskreislauf aufrecht erhalten kann, bis eine Mindesttemperatur (T1) im Kollektorbereich erreicht ist.

9. Solaranlage nach Anspruch 8, **dadurch gekennzeichnet, dass** im Primärkreislauf (PKL) zwischen Hilfspumpe (HPU) und Wärmetauscher (WAT) ein Rückschlagventil (RSV) angeordnet ist.

## Claims

1. Solar system comprising a solar collector (SOK) which is connected to the primary side of a heat exchanger (WAT) via a primary liquid circuit (PKL), comprising a storage tank (SPE) which is connected to the secondary side of the heat exchanger via a secondary liquid circuit (SKL), comprising a primary pump (PPU) in the primary circuit and a secondary pump (SPU) in the secondary circuit, and comprising a controller (STE) for controlling the pumps (PPU, SPU) as a function of temperatures (T1 and T4, respectively) measured by means of sensors (S1, S2, S3, S4), wherein at least the primary circuit can be activated as soon as measured temperatures (T4) or their differences exceed or fall below predefinable values,
**characterised in that**
the controller (STE) is configured such that following a request to activate the primary circuit it initially maintains an auxiliary primary circuit which at least substantially excludes the heat exchanger (WAT) with the aid of a hydraulic means (V1, V1' + V2, HPU, V3) until a temperature (T3, T1) measured by means of a sensor (S3, S1) in the region of the primary circuit and/or the collector (SOK) exceeds a value that rules out frost damage.

2. Solar system according to claim 1, **characterised in that** the hydraulic means is a valve arrangement (V1, V1' + V2, V3) in the primary circuit by means of which the primary side of the heat exchanger (WAT) can be bypassed.

3. Solar system according to claim 2, **characterised in that** the valve arrangement is a three-way valve (V1) with the aid of which the primary side of the heat exchanger can be bypassed by way of a bypass (BYP).

4. Solar system according to claim 3, **characterised in that** the three-way valve (V1) sits in the return line of the primary circuit and is connected to the bypass (BYP).

5. Solar system according to one of claims 2 to 4, **characterised in that** a non-return valve (RSV) is arranged in the inflow of the primary circuit on the side of the heat exchanger (WAT).

6. Solar system according to claim 2, **characterised in that** the valve arrangement consists of two three-way valves (V1', V2) on the two sides of the bypass (BYP) which, under the control of the controller (STE), when the primary side of the heat exchanger (WAT) is bypassed, completely isolate said primary side from the part of the primary circuit containing the collector (SOK).

7. Solar system according to claim 2, **characterised in that** the valve arrangement consists of a four-way valve (V3) which, under the control of the controller (STE), when the primary side of the heat exchanger (WAT) is bypassed, completely isolates said primary side from the part of the primary circuit (PKL) containing the collector (SOK).

8. Solar system according to claim 1, **characterised in that** in addition to the primary circuit pump (PPU) there is provided a primary auxiliary pump (HPU) which, following activation by the controller (STE), can maintain close to the collector a primary auxiliary circuit excluding the heat exchanger (WAT) until a minimum temperature (T1) has been reached in the collector region.

9. Solar system according to claim 8, **characterised in that** a non-return valve (RSV) is arranged in the primary circuit (PKL) between auxiliary pump (HPU) and heat exchanger (WAT).

## Revendications

1. Installation solaire comprenant un collecteur ( SOK ) solaire, qui est relié par un circuit ( PKL ) primaire de liquide au côté primaire d'un échangeur de chaleur ( WAT ), comprenant un accumulateur ( SPE ), qui est relié par un circuit ( SKL ) secondaire de liquide au côté secondaire de l'échangeur de chaleur, comprenant une pompe ( PPU ) primaire dans le circuit primaire et une pompe ( SPU ) secondaire dans le circuit secondaire ainsi qu'une commande ( STE ) pour commander les pompes ( PPU, SPU ) en fonction de températures ( T1 ou T4 ) mesurées au moyen de capteurs ( S1, S2, S3, S4 ), au moins le circuit primaire pouvant être activé dès que des températures ( T4 ) mesurées ou leurs différences de température deviennent supérieures ou inférieures à des valeurs pouvant êtres prescrites,
**caractérisée en ce que**
la commande ( STE ) est telle, qu'après une invitation à l'activation du circuit primaire à l'aide d'un moyen ( V1, V1' + V2, HPU, V3 ) hydraulique, qu'elle maintient d'abord un circuit primaire auxiliaire, excluant au moins pour l'essentiel l'échangeur de chaleur ( WAT ), jusqu'à ce qu'une température ( T3, T1 ) mesurée au moyen d'un capteur ( S3, S1 ) dans la partie du circuit primaire et/ou du collecteur ( SOK ) dépasse une valeur excluant des dommages par le gel.

2. Installation solaire suivant la revendication 1, **caractérisée en ce que** le moyen hydraulique est un dispositif ( V1, V1' + V2, HPU, V3 ) de vanne dans le circuit primaire, par lequel le côté primaire de l'échangeur de chaleur ( WAT ) peut être court-circuité.

3. Installation solaire suivant la revendication 2, **caractérisée en ce que** le dispositif de vanne est une vanne ( V1 ) à trois voies, à l'aide de laquelle le côté primaire de l'échangeur de chaleur peut être court-circuité par une dérivation ( BYP ).

4. Installation solaire suivant la revendication 3, **caractérisée en que** la vanne ( V1 ) à trois voies se trouve dans le retour du circuit primaire et est reliée à la dérivation ( BYP ).

5. Installation solaire suivant l'une des revendications 2 à 4, **caractérisée en ce qu'**un clapet anti-retour ( RSV ) est monté dans la partie d'entrée du circuit primaire du côté de l'échangeur de chaleur ( WAT ).

6. Installation solaire suivant la revendication 2, **caractérisée en ce que** le dispositif à vanne est constitué de trois vannes ( V1', V2 ) à trois voies des deux côtés de la dérivation ( BYP ) qui, en étant commandées par la commande ( STE ), séparent, lors du court-circuitage du côté primaire de l'échangeur de chaleur ( WAT ), ce côté complètement de la partie du circuit primaire contenant le collecteur ( SOK ).

7. Installation solaire suivant la revendication 2, **caractérisée en ce que** le dispositif à vanne est composé d'une vanne ( V3 ) à quatre voies qui, commandées par la commande ( STE ), sépare, lorsque le côté primaire de l'échangeur de chaleur ( WAT ) est court-circuité, ce côté primaire complètement de la partie du circuit ( PKL ) primaire contenant le collecteur ( SOK ) solaire.

8. Installation solaire suivant la revendication 1, **caractérisée en ce que**, en plus de la pompe ( PPU ) du circuit primaire, il est prévu une pompe ( HPU ) primaire qui, après l'activation par la commande ( STE ), peut maintenir près du collecteur un circuit auxiliaire primaire excluant l'échangeur de chaleur ( WAT ) jusqu'à ce qu'une température ( Tel minimum soit atteinte dans la partie du collecteur.

9. Installation solaire suivant la revendication 8, **caractérisée en ce qu'**un clapet anti-retour ( RSV ) est monté dans le circuit ( PKL ) primaire entre la pompe ( HPU ) auxiliaire et l'échangeur de chaleur ( WAT ).
